# EUROPÄISCHE PATENTSCHRIFT

(11) **EP 1 922 174 B1**
(45) Veröffentlichungstag und Bekanntmachung des Hinweises auf die Patenterteilung: **15.10.2014**
(21) Anmeldenummer: 06760814.1
(22) Anmeldetag: 03.08.2006
(51) Int. Cl.: B23K 9/32, A61F 9/06

(54) **VERFAHREN ZUM STEUERN EINES SCHUTZVISIERS**
METHOD FOR CONTROLLING A PROTECTION VISOR
PROCEDE POUR ASSURER LA COMMANDE D'UNE VISIERE DE PROTECTION

(30) Priorität: 30.08.2005 AT 14202005
(43) Veröffentlichungstag der Anmeldung: 21.05.2008
(73) Patentinhaber: Fronius International GmbH, 4363 Pettenbach (AT)
(72) Erfinder: FRIEDL, Helmut, A-4621 Sipbachzell (AT); KROISS, Uwe, A-4073 Wilhering (AT); SARDY, Bank, A-4040 Linz/Donau (AT)
(74) Vertreter: Sonn & Partner Patentanwälte
(86) Internationale Anmeldenummer: PCT/AT2006/000327
(87) Internationale Veröffentlichungsnummer: WO 2007/025315

(56) Entgegenhaltungen:
- WO-A-01/12376
- WO-A-2005/009309
- US-A- 5 880 793

## Beschreibung

Die Erfindung betrifft ein Verfahren zum Steuern eines Schutzvisiers, z.B. an einem Schweißhelm, von einem Schweißgerät, bei dem von dem Schweißgerät über eine Sende-/Empfangsvorrichtung ein Signal übertragen wird, worauf von einer dem Schutzvisier zugeordneten, z.B. im Schweißhelm integrierten Sende-/Empfangs-vorrichtung das elektrisch ansteuerbare Schutzvisier angesteuert wird und eine Abdunkelung des Schutzvisiers erfolgt, wobei während des Schweißprozesses, also nach dem Zünden des Lichtbogens, von einer Steuervorrichtung des Schweißgerätes über die Sende-/Empfangsvorrichtungen das Schutzvisier angesteuert wird und eine Abdunkelung des Schutzvisiers erfolgt.

Aus der EP 1 202 832 B1, welche die Merkmale des Obergriffs des Anspruchs 1 beschreibt, ist ein Steuerverfahren für eine Schweißanlage mit einem Schweißgerät und einem Schutzhelm für einen Benutzer bekannt, bei dem durch Betätigen eines Startschalters an einem Schweißbrenner oder einem Schweißgerät ein Startsignal an eine Steuervorrichtung des Schweißgerätes zum Aktivieren eines Schweißprozesses erzeugt wird. Bei der Aktivierung des Startschalters wird ein Startsignal über eine Sende-/Empfangsvorrichtung an den Schweißhelm übersandt, worauf von dem Schweißhelm ein elektrisch steuer- und/oder regelbares Schutzvisier durch Anlegen von Energie aktiviert wird und anschließend der Schweißprozess, insbesondere die Zündung des Lichtbogens, gestartet wird. Nachteilig ist hierbei, dass (hierbei) lediglich vor oder nach dem Schweißprozess eine Ansteuerung des Schutzvisiers durchgeführt wird, so dass während des gesamten Schweißprozesses das Schutzvisier des Schweißhelms annähernd gleichbleibend dunkel gehalten wird.

Ein weiteres Verfahren zur Abdunkelung eines Schutzvisiers beispielsweise eines Schweißhelms ist aus der WO 2005/009309 A1 bekannt.

Die US 4 638 146 A zeigt ein Verfahren und eine Vorrichtung zum Schutz der Augen eines Schweißers gegen das Lichtbogenschweißlicht, bei dem zur Sicherstellung einer rechtzeitigen Verdunkelung des Schweißvisiers das Magnetfeld um das Schweißstromkabel als auslösendes Ereignis verwendet wird.

Die US 5 208 688 A beschreibt einen Schweißhelm mit einer speziellen Art der Filterung des Lichts zur Sicherstellung eines optimalen Schutzes der Augen des Schweißers.

Die US 3 873 804 A, die US 6 067 129 A, die US 4 418 267 A sowie die US 2005/0001155 A1 zeigen verschiedene Ausführungsformen eines Schweißhelms bzw. einer Schutzeinrichtung für Schweißer, welche zur Erzielung eines optimalen Schutzes so gesteuert werden, dass sie spätestens zum Zeitpunkt des Zündens des Lichtbogens die Visiereinrichtung abdunkeln. Während des Schweißprozesses findet bei sämtlichen Verfahren und Vorrichtungen des Standes der Technik keine Regelung der Abdunkelung des Schweißvisiers statt.

Die Aufgabe der Erfindung liegt darin, ein Verfahren zum Steuern eines Schweißhelmes von einem Schweißgerät aus zu schaffen, um eine bessere Schweißprözessverfolgung für den Schweißer zu erreichen.

Die Aufgabe der Erfindung wird dadurch gelöst, dass die Stärke bzw. der Grad der Abdunkelung des Schutzvisiers während des Schweißprozesses verändert wird, indem das Schutzvisier in Abhängigkeit des Prozesszustands des Schweißprozesses zwischen zwei oder mehreren Stufen der Abdunkelung wiederholt abwechselnd abgedunkelt und aufgehellt wird.

Vorteilhaft ist hierbei, dass durch gezieltes Aufhellen des Schutzvisiers während eines Schweißprozesses eine optimale Schmelzbad-Beobachtung vom Schweißer bzw. Benützer aus durchgeführt werden kann. Somit kann der Benutzer bei schlechten Schweißergebnissen eine optimale Einstellung des Schweißgerätes vornehmen, da der Benutzer die unterschiedlichen Prozesszustände bei einer Probeschweißung genau beobachten kann. Auch wird dadurch erreicht, dass der Schweißer die Umgebung, wie die Spaltmaße, die Lage der Teile usw., besser erkennen und somit eine optimale Führung des Schweißbrenners vornehmen kann. Durch die Aufhellung des Schutzvisiers bekommt der Benutzer auch eine sehr gute Sicht auf die frisch hergestellte Schweißnaht, wodurch er sofort die Qualität der Schweißnaht abschätzen kann.

In vorteilhafter Weise wird durch die Maßnahmen nach den Ansprüchen 2 bis 14 erreicht, dass sichergestellt wird, dass dem Schweißer keinerlei Schäden am Augenlicht entstehen, wobei insbesondere ein Verblitzen der Augen verhindert wird.

Die vorliegende Erfindung wird anhand der beigefügten, schematischen Zeichnungen näher erläutert.

Darin zeigen:
- Fig. 1: eine schematische Darstellung einer Schweißanlage mit einem Schweißgerät und einem daran angeschlossenen Schweißhelm;
- Fig. 2: eine schematische Darstellung eines Puls-Schweißprozesses;
- Fig. 3: eine schematische Darstellung eines weiteren Puls-Schweißprozesses mit einem unterschiedlichen Aufhellungsverfahren;
- Fig. 4: eine schematische Darstellung eines Kurzschluss- Schweißprozesses;
- Fig. 5: eine schematische Darstellung eines CMT-Schweißprozesses;
- Fig. 6: eine schematische Darstellung eines WIG-Schweißprozesses; und
- Fig. 7: eine schematische Darstellung eines AC-WIG-Schweißprozesses.

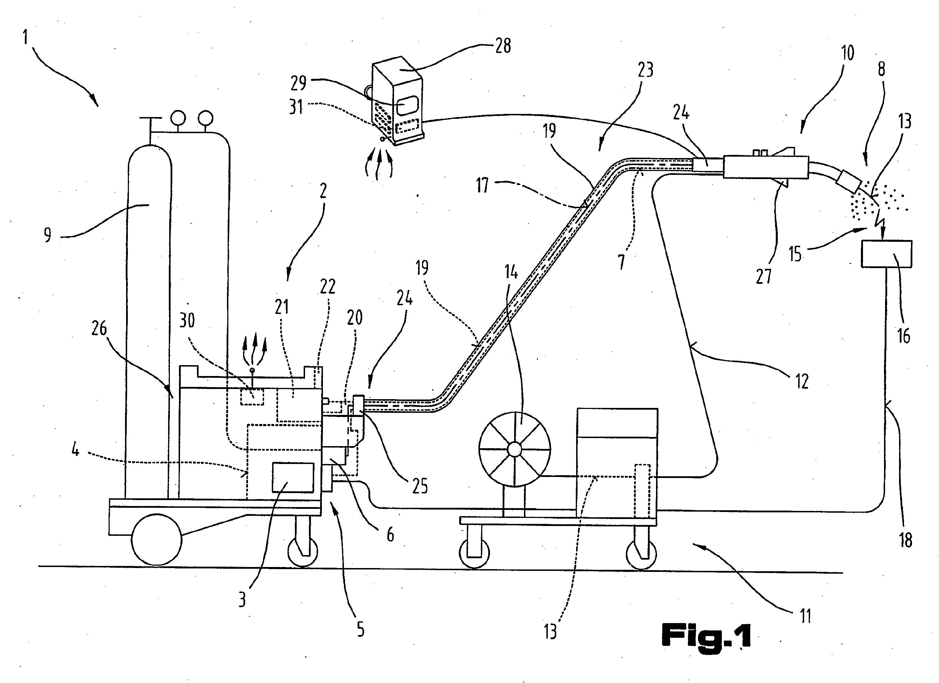

In Fig. 1 ist eine Schweißanlage bzw. ein Schweißgerät 1 für verschiedenste Schweißverfahren wie z.B. MIG/MAG-Schweißen bzw. TIG-Schweißen oder Elektroden-Schweißverfahren mit oder ohne einer Schutzgasatmosphäre gezeigt. Selbstverständlich ist es möglich, dass die erfindungsgemäße Lösung bei einer Stromquelle bzw. einer Schweißstromquelle oder bei Roboterschweißanlagen eingesetzt werden kann.

Das Schweißgerät 1 umfasst eine Stromquelle 2 mit einem Leistungsteil 3, einer Steuervorrichtung 4 und einem dem Leistungsteil 3 bzw. der Steuervorrichtung 4 zugeordnetem Umschaltglied 5. Das Umschaltglied 5 bzw. die Steuervorrichtung 4 ist mit einem Steuerventil 6 verbunden, welches in einer Versorgungsleitung 7 für ein Gas 8, insbesondere ein Schutzgas, wie beispielsweise CO₂, Helium, Argon oder dgl., zwischen einem Gasspeicher 9 und einem Schweißbrenner 10 angeordnet ist.

Zudem kann über die Steuervorrichtung 4 noch ein Drahtvorschubgerät 11, welches beispielsweise für das MIG/MAG-Schweißen üblich ist, angesteuert werden, wobei über eine Versorgungsleitung 12 ein Schweißdraht 13 von einer Vorratstrommel 14 in den Bereich des Schweißbrenners 10 zugeführt wird. Selbstverständlich ist es möglich, dass das Drahtvorschubgerät 11, wie es aus dem Stand der Technik bekannt ist, im Schweißgerät 1, insbesondere im Grundgehäuse, integriert und nicht wie in Fig. 1 dargestellt als Zusatzgerät ausgebildet ist.

Der Strom zum Aufbauen eines Lichtbogens 15 zwischen dem Schweißdraht 13 und einem Werkstück 16 wird über eine Schweißleitung 17 vom Leistungsteil 3 dem Schweißbrenner 10 bzw. dem Schweißdraht 13 zugeführt, wobei das zu verschweißende Werkstück 16 über eine weitere Schweißleitung 18 ebenfalls mit dem Schweißgerät 1, insbesondere mit dem Leistungsteil 3, verbunden ist und somit über den Lichtbogen 15 ein Stromkreis aufgebaut werden kann.

Zum Kühlen des Schweißbrenners 10 kann über einen Kühlkreislauf 19 der Schweißbrenner 10 unter Zwischenschaltung eines Strömungswächters 20 mit einem Flüssigkeitsbehälter, insbesondere einem Wasserbehälter 21, verbunden werden, wodurch bei der Inbetriebnahme des Schweißbrenners 10 der Kühlkreislauf 19, insbesondere eine für die im Wasserbehälter 21 angeordnete Flüssigkeit verwendete Flüssigkeitspumpe, gestartet wird und somit eine Kühlung des Schweißbrenners 10 bzw. des Schweißdrahtes bewirkt werden kann.

Das Schweißgerät 1 weist weiters eine Ein- und/oder Ausgabevorrichtung 22 auf, über die die unterschiedlichsten Schweißparameter bzw. Betriebsarten des Schweißgerätes 1 eingestellt werden können. Dabei werden die über die Ein- und/oder Ausgabevorrichtung 22 eingestellten Schweißparameter an die Steuervorrichtung 4 weitergeleitet und von dieser werden anschließend die einzelnen Komponenten der Schweißanlage bzw. des Schweißgerätes 1 angesteuert.

Weiters ist in dem dargestellten Ausführungsbeispiel der Schweißbrenner 10 über ein Schlauchpaket 23 mit dem Schweißgerät 1 bzw. der Schweißanlage verbunden. In dem Schlauchpaket 23 sind die einzelnen Leitungen vom Schweißgerät 1 zum Schweißbrenner 10 angeordnet. Das Schlauchpaket 23 wird über eine zum Stand der Technik zählende Verbindungsvorrichtung 24 mit dem Schweißbrenner 10 verbunden, wogegen die einzelnen Leitungen im Schlauchpaket 23 mit den einzelnen Kontakten des Schweißgerätes 1 über Anschlussbuchsen bzw. Steckverbindungen verbunden sind. Damit eine entsprechende Zugentlastung des Schlauchpaketes 23 gewährleistet ist, ist das Schlauchpaket 23 über eine Zugentlastungsvorrichtung 25 mit einem Gehäuse 26, insbesondere mit dem Grundgehäuse des Schweißgerätes 1, verbunden.

Damit vom Benutzer bzw. Schweißer ein Schweißprozess gestartet werden kann, ist am Schweißbrenner 10 ein Startschalter 27 angeordnet, d.h. dass durch Aktivieren des Startschalters 27 vom Schweißer ein Signal erzeugt wird, welches über zumindest eine Leitung an die Steuervorrichtung 4 weitergeleitet wird, so dass die Steuervorrichtung 4 erkennen kann, dass ein Schweißprozess und somit eine Zündung des Lichtbogens 15 gestartet werden soll, so dass alle notwendigen Verfahrensschritte, wie das Starten eines Gasvorlaufes, die Zündung des Lichtbogens 15, die Aktivierung des Drahtvorschubgerätes 11 usw. von der Steuervorrichtung 4 eingeleitet werden. Diese einzelnen Verfahrensschritte sind für sich bereits aus dem Stand der Technik bekannt und werden somit nicht mehr näher beschrieben. Selbstverständlich ist es möglich, dass der Startschalter 27 statt am Schweißbrenner 10 an der Ein- und/oder Ausgabevorrichtung 22 oder zusätzlich an dieser angeordnet ist.

Damit der Schweißer, insbesondere dessen Augen, vor dem Lichtbogen 15, insbesondere vor der hohen Lichtintensität des Lichtbogens 15, und/oder den entstehenden Schweißspritzern geschützt wird, wird vom Schweißer eine entsprechende Schutzvorrichtung, insbesondere ein Schweißhelm 28, verwendet, der, wie bereits aus dem Stand der Technik bekannt, am Kopf des Schweißers über ein Traggestell befestigt wird oder über einen Handgriff vor das Gesicht, insbesondere vor die Augen, gehalten wird. Bei der dargestellten Schweißanlage mit dem Schweißgerät 1 und dem Schweißhelm 28 weist der Schweißhelm 28 ein elektrisch regelbares Schutzvisier 29 auf, d.h. dass durch Anlegen von Energie, insbesondere von Strom und Spannung, eine Verdunkelung des Schutzvisiers 29 hervorgerufen wird und somit der Benutzer vor der Lichtintensität des Lichtbogens 15 geschützt werden kann.

Wie bereits aus dem Stand der Technik bekannt, ist eine drahtgebundene oder drahtlose Signalverbindung, insbesondere eine Datenverbindung zwischen dem Schweißhelm 28 und dem Schweißgerät 1 bekannt, wobei durch Aussenden eines Datensignals vom Schweißgerät 1 das Schutzvisier 29 des Schweißhelms 28 abgedunkelt wird. Hierzu sind sowohl im Schweißgerät 1 als auch im Schweißhelm 28 eine Sende-/Empfangsvorrichtung 30 bzw. 31 angeordnet, wobei die Sende-/Empfangsvorrichtung 31 im Schweißhelm 28 auch die Ansteuerung des Schutzvisiers 29 durchführt. Dabei wird bei dem Stand der Technik durch Betätigen des Startschalters 27 am Schweißbrenner 10 oder am Schweißgerät 1 ein Startsignal an die Steuervorrichtung 4 des Schweißgerätes 1 zum Aktivieren eines Schweißprozesses gesendet, worauf ein Datensignal bzw. Funksignal oder ein Startbefehl von der Steuervorrichtung 4 des Schweißgerätes 1 für den Schweißhelm 28 erzeugt wird. Dieses Datensignal wird anschließend über die in dem Schweißgerät 1 integrierte Sende-/Empfangsvorrichtung 30 an die weitere im Schweißhelm 28 integriert Sende-/Empfangsvorrichtung 31 gesendet, worauf von einer in der Sende-/Empfangvorrichtwng 31 angeordneten Ansteuervorrichtung eine Ansteuerung des elektrisch steuerund/oder regelbaren Schutzvisiers 29 durchführt und eine Verdunkelung des Schutzvisiers 29 eingeleitet wird, worauf anschließend der Schweißprozess, insbesondere die Zündung des Lichtbogens 15, bevorzugt nach Ablauf einer voreinstellbaren Vorlaufzeit und/oder einer Gasvorlaufzeit, in der die Verdunkelung des Schutzvisiers 29 erfolgt, gestartet wird. Dabei ist es auch möglich, dass erst nach einer Rückantwort von der Sende-/Empfangsvorrichtung 31, welche durch einfaches Aussenden von einem Rückantwortesignal über die Sende- und/oder Empfangsvorrichtung 31 realisiert wird, die Zündung des Lichtbogens 15 erfolgt, wodurch immer sichergestellt ist, dass bei der Zündung des Lichtbogens 15 das Schutzvisier 29 bereits dunkel geschaltet ist.

Erfindungsgemäß ist nunmehr vorgesehen, dass während des Schweißprozesses, also nach dem Zünden des Lichtbogens 15, von der Steuervorrichtung 4 des Schweißgerätes 1 über die Sende-/Empfangsvorrichtungen 30, 31 das Schutzvisier 29 angesteuert wird, so dass die Stärke bzw. der Grad der Abdunkelung des Schutzvisiers 29 während des Schweißprozesses verändert wird, d.h. dass beispielsweise bei einem bestehenden Lichtbogen 15 kurzzeitig das Schutzvisier 29 aufgehellt wird. Damit wird erreicht, dass aufgrund von unterschiedlichen Helligkeitsstufen für das Auge eine optische Aufhellung des Schutzvisiers 29 entsteht, ohne dass dabei ein Verblitzen des Augenlichtes verursacht wird. Der Benutzer kann somit viel besser den Schweißprozess beobachten bzw. spezielle Schweißzustände besser überwachen und somit eine optimale Einstellung und ein optimales Schweißergebnis erzielen.

Damit eine Schädigung der Augen des Benutzers vermieden wird, ist bei einem derartigen Vorgehen darauf zu achten, dass eine entsprechende Kontrolle über den Schweißprozess von der Steuervorrichtung 4 durchgeführt wird. Grundsätzlich können nämlich bei Schweißprozessen unkontrollierte Zustände auftreten, wie beispielsweise ein Kurzschluss, der anschließend mit einem hohen Strom aufgebrochen wird, wobei ein sehr starker und intensiver Lichtbogen 15 nach dem Auftrennen entsteht. Derartige starke und intensive Lichtbögen 15 müssen somit von der Steuervorrichtung 4 unterbunden werden, um das Auge des Schweißers zu schützen. Hierzu steuert die Steuervorrichtung 4 entsprechend die Stromquelle 2 des Schweißgerätes 1 derart an, dass bei einer geringen Stärke der Abdunkelung des Schutzvisiers 29, also bei geöffneter Blende des Schutzvisiers 29, von der Steuervorrichtung 4 ein Erhöhen des Stromes durch die Stromquelle 2 des Schweißgerätes 1 verhindert wird. Weiters ist vorgesehen, dass vor der Reduzierung bzw. Veränderung der Stärke der Abdunkelung des Schutzvisiers 29 von der Steuervorrichtung 4 die von der Stromquelle 2 gelieferte Stromhöhe ermittelt wird. Damit kann von der Steuervorrichtung 4 der Verdunkelungsrad für das Schutzvisier 29 im Bezug auf die gerade anliegende Stromstärke festgelegt werden bzw. kann von der Steuervorrichtung 4 überprüft werden, ob bei einer Veränderung des Verdunkelungsgrades der eingestellte Verdunkelungsrad bei der gerade anliegenden bzw. gelieferten Stromstärke auch ohne Gefahr für den Benutzer ausgeführt werden kann. Sollte dies nicht der Fall sein, so kann von der Steuervorrichtung 4 der Vorgang zum Verändern des Grades bzw. der Stärke der Abdunkelung des Schutzvisiers 29 unterbrochen bzw. verschoben werden oder eine entsprechende Ansteuerung der Stromquelle 2 durchgeführt werden, so dass der Strom auf einen für den eingestellten bzw. zu verändernden Verdunkelungsgrad entsprechenden Wert abgesenkt werden kann.

Grundsätzlich kann also gesagt werden, dass die Ansteuerung des Schutzvisiers 29 je nach Prozesszustand des Schweißprozesses erfolgt, d.h. dass während des Schweißprozesses eine wiederholte Ansteuerung des Schutzvisiers 29 zum Verändern des Grades bzw. der Intensität der Abdunkelung des Schutzvisiers 29 erfolgt, wobei bei bestimmten voreinstellbaren Prozesszuständen eine Ansteuerung des Schutzvisiers 29 erfolgt bzw. eine entsprechende Steuerung des Schweißprozesse für die Veränderung des Verdunkelungsgrades durchgeführt wird. Es ist selbstverständlich auch möglich, dass die Ansteuerung des Schutzvisiers 29 zu fest vorgegebenen Zeitpunkten erfolgt, wobei hierzu keinerlei Rücksicht auf den gerade anliegenden Prozesszustand genommen wird. Lediglich sei hierzu erwähnt, dass bevorzugt von der Steuervorrichtung 4 eine entsprechende Überwachung durchgeführt wird, so dass keinerlei Schäden am Augenlicht des Benutzer auftreten können.

Bevorzugt wird bei der Ansteuerung des Schutzvisiers 29 während des Schweißprozesses die Stärke der Abdunkelung des Schutzvisiers nach der Leistung des gerade anliegenden Schweißprozesses verändert. Hierbei erfolgt bei der Ansteuerung des Schutzvisiers 29 die Einstellung der Abdunkelung zwischen zwei oder mehreren Stufen, wobei der Verdunkelungsgrad durch ein entsprechendes Datensignal an die Sende-/Auswertevorrichtung 31 des Schweißhelms 28 übermittelt wird. Der Datenaustausch zwischen dem Schweißgerät 1 und dem Schweißhelm kann dabei durch analoge oder digitale Datensignale erfolgen.

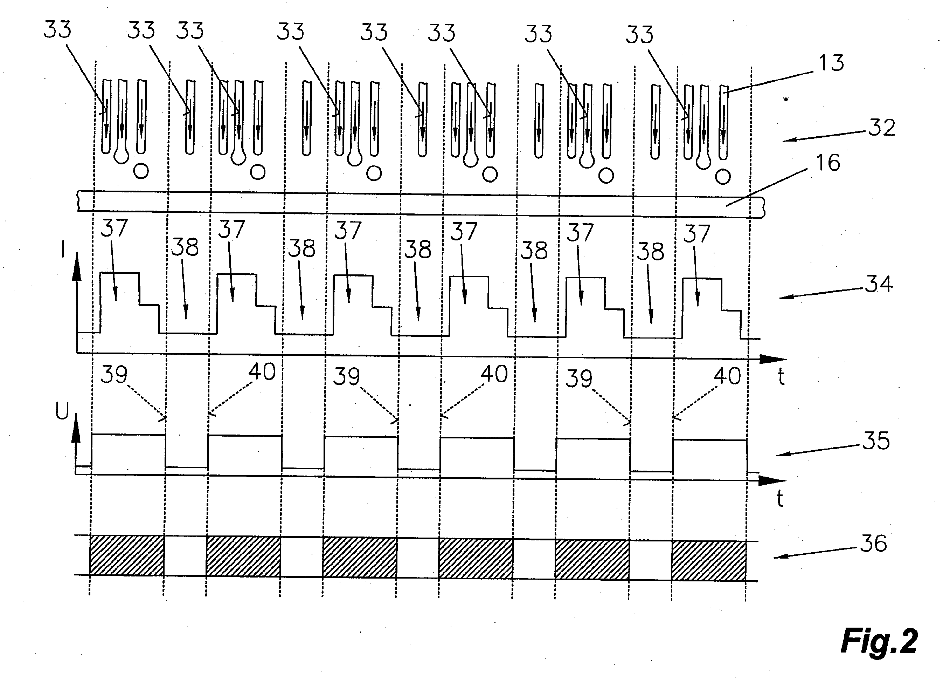

In den Fig. 2 bis 7 sind Diagramme eines Ablaufes für die erfindungsgemäße Verdunkelung des Schutzvisiers 29 während des Schweißprozesses in vereinfachter Form dargestellt. Dabei ist die Schweißdrahtbewegung 32 im Bezug auf das Werkstück 16 dargestellt, wobei entsprechend den Pfeilen 33 die Förderrichtung eingetragen wurde. Weiters ist ein Stromverlauf 34 für die unterschiedlichen bekannten Schweißprozesse dargestellt, wobei auf die Darstellung der Zündung des Lichtbogens 15 und somit auf die erstmalige Verdunkelung des Schutzvisiers 29 verzichtet wurde, d.h. dass ein Teilausschnitt des Stromverlaufs 34 während des Schweißprozesses dargestellt ist. In der nächsten Diagramm-Zeile ist das Datensignal 35 dargestellt, welches von dem Schweißgerät 1 an den Schweißhelm 28 für die Ansteuerung des Schutzvisiers 29 gesendet wird, wobei in der anschließenden Darstellung in Fig. 2 bis 7 schematisch der Helligkeitsgrad 36 des Schutzvisiers 29 dargestellt wurde. Hierbei bedeutet eine engere Schraffur einen hohen Verdunkelungsgrad und eine weitere bzw. keine Schraffur einen geringen Verdunkelungsgrad.

In Fig. 2 ist ein Puls-Schweißprozess schematisch dargestellt, wobei auf den genaueren Stromverlauf 34 nicht mehr näher eingegangen wird, da dieser bereits aus dem Stand der Technik bekannt ist.

Bei einem Puls-Schweißprozess erfolgt in einer Pulsphase 37 eine stärkere Abdunkelung des Schutzvisiers 29 als in einer Basisphase 38, d.h. dass von der Steuervorrichtung 4, die über den gerade anliegenden Prozesszustand Bescheid weiß, nach Abschluss der Tropfenablöse zu einem bestimmten festgelegten Zeitpunkt 39, wie mit strichlierter Linie dargestellt, das Datensignal 35 verändert wird, wodurch von der Sende-/Empfangsvorrichtung 31 im Schweißhelm 30 der Grad bzw. die Stärke der Abdunkelung des Schutzvisiers 29 entsprechend verändert wird. Damit jedoch vor der nächsten Pulsphase 37, bei der der Schweißstrom wieder erhöht wird und die Lichtbogenintensivität wiederum zunimmt, ein Schutz der Augen des Benutzers gegeben ist, wird abermals zu einem definierten Zeitpunkt 40 das Datensignal 35 verändert, worauf eine Verdunkelung des Schutzvisiers 29 herbeigeführt wird, worauf die nächste Pulsphase 37 eingeleitet werden kann.

Es wird also immer wiederkehrend in der Basisphase 38 eine Aufhellung des Schutzvisiers 29 durchgeführt, da in der Basisphase 38 eine geringere Stromstärke anliegt, und somit die Lichtbogenintensität geringer ist, als in der Pulsphase.

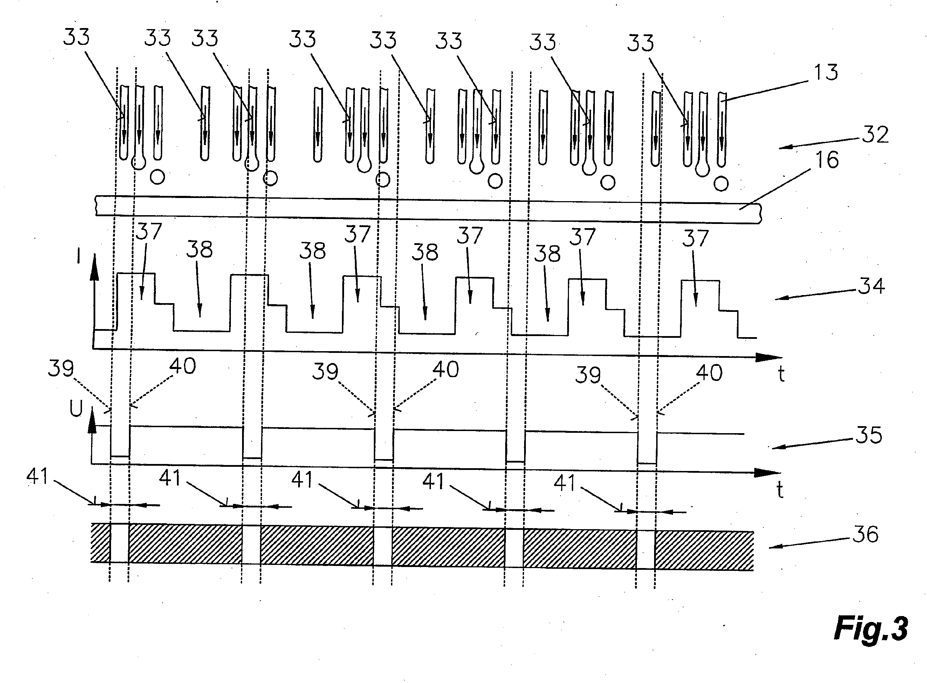

In Fig. 3 ist wiederum ein Puls-Schweißprozess dargestellt, bei dem jedoch nunmehr zu unterschiedlichen Prozesszuständen bzw. Zeitpunkten eine Aufhellung des Schutzvisiers 29 erfolgt.

Hierbei ist jedoch darauf zu achten, dass die Parameter zur Aufhellung des Schutzvisiers 29 derart gewählt werden, dass keinerlei Schäden an den Augen des Benutzers auftreten, d.h. dass bei einer Aufhellung des Schutzvisiers 29 bei einer hohen Stromhöhe diese nur sehr kurzzeitig erfolgt; vgl. die Zeitdauer 41 in Fig. 3. Dabei ist es auch möglich, dass je nach Stromhöhe die Zeitdauer 41 für die Aufhellung verändert wird, also eine Abhängigkeit der Stromhöhe zur Zeitdauer 41 für die Aufhellung geschaffen wird.

Wie nun aus Fig. 3 ersichtlich, erfolgt jeweils zu unterschiedlichen Prozesszeitpunkten bzw. Prozesszuständen über den gesamten wiederkehrenden Prozesszyklus eine Aufhellung des Schutzvisiers, d.h. dass beispielsweise ein erstmaliges Aufhellen kurz vor der Einleitung der Pulsphase 37 (vgl. den ersten Zeitpunkt 39 in Fig. 3) gestartet und über eine vorgegebene definierte Zeitdauer 41 durchgeführt wird, so dass zum Zeitpunkt 40 eine Beendigung der Aufhellung nach Erreichen der Stromhöhe für die Pulsphase 37 beendet wird. Die nächste Aufhellung des Schutzvisiers 29 erfolgt nunmehr wiederum in der nächsten darauffolgenden Pulsphase 37 gegenüber der vorhergehenden Pulsphase 37 zu versetzten Zeitpunkten 39, 40. Eine derartige versetzte Aufhellung des Schutzvisiers 29 setzt sich durch den gesamten Schweißprozess hindurch fort, wodurch in sämtlichen unterschiedlichen Prozesszuständen das Schutzvisier 29 kurzfristig geöffnet wird und der Benutzer somit besser die unterschiedlichen Prozesszustände beobachten kann. Selbstverständlich ist es auch möglich, dass immer nur in der Pulsphase 37 eine derartige versetzte Aufhellung erfolgt und in der Basisphase 38 keine Aufhellung durchgeführt wird.

Durch eine derartige Verschiebung bzw. Versetzung der Aufhellung zu unterschiedlichen Prozesszeitpunkten wird erreicht, dass der Benutzer den Eindruck wie bei einem Hochgeschwindigkeitsvideo bekommt.

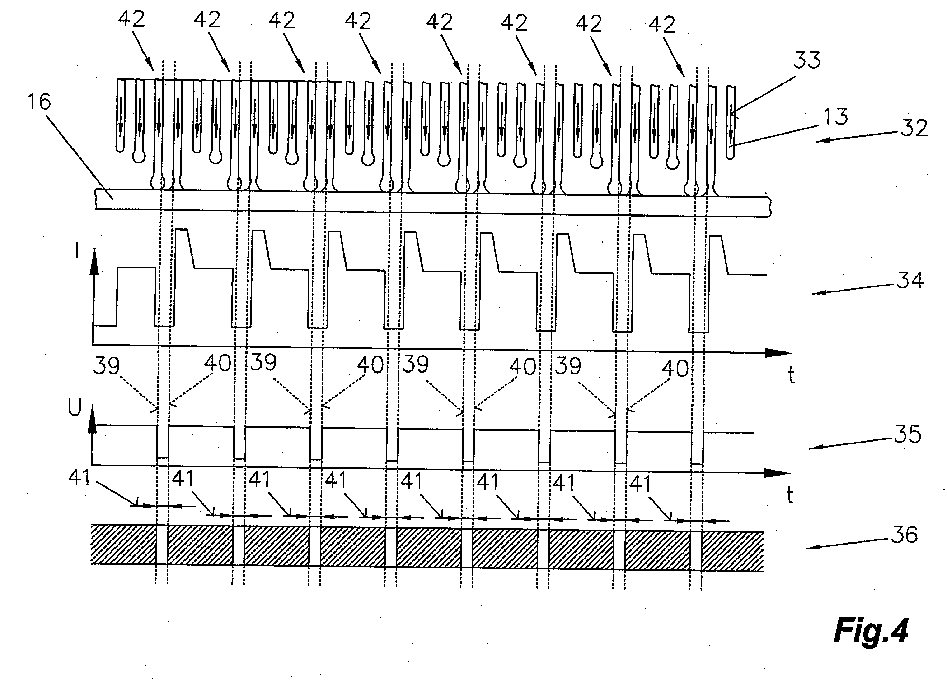

In Fig. 4 ist ein weiterer, an sich zum Stand der Technik zählender Schweißprozess, nämlich ein Kurzschlussprozess, dargestellt.

Bei einem derartigen Kurzschlussprozess erfolgt normalerweise in unregelmäßigen Abständen (dargestellt ist ein optimaler Prozessverlauf) ein Kurzschluss zwischen dem Schweißdraht 13 und dem Werkstück 16. Hierbei wird im Stand der Technik üblicherweise durch Erhöhen des Schweißstromes der Kurzschluss aufgelöst.

Hierbei wird jedoch für die Aufhellung des Schutzvisiers 29 nunmehr in die übliche Prozessregelung eingegriffen, da das Schweißgerät 1 beispielsweise derart eingestellt wurde, dass jeweils in der Kurzschlussphase 42 eine Aufhellung des Schutzvisiers 29 durchgeführt wird. Somit wird von der Steuervorrichtung 4 nach Erkennen des Kurzschlusses nunmehr die Stromquelle 2 derart angesteuert, dass nach dem Auftreten des Kurzschlusses der Strom abgesenkt wird, worauf das Datensignal 35 zum Verändern des Grades bzw. der Stärke der Abdunkelung des Schutzvisiers 29 verändert wird und somit eine Aufhellung des Schutzvisiers 29 erfolgt. Die Aufhellung wird über eine voreingestellte Zeitdauer 41 aufrecht erhalten, worauf das Schutzvisier 29 wiederum verdunkelt wird und von der Steuervorrichtung 4 die Regelung für den Schweißprozess wieder frei gegeben wird, so dass die Auflösung des Kurzschlusses durch entsprechende Erhöhung des Stromes erfolgen kann.

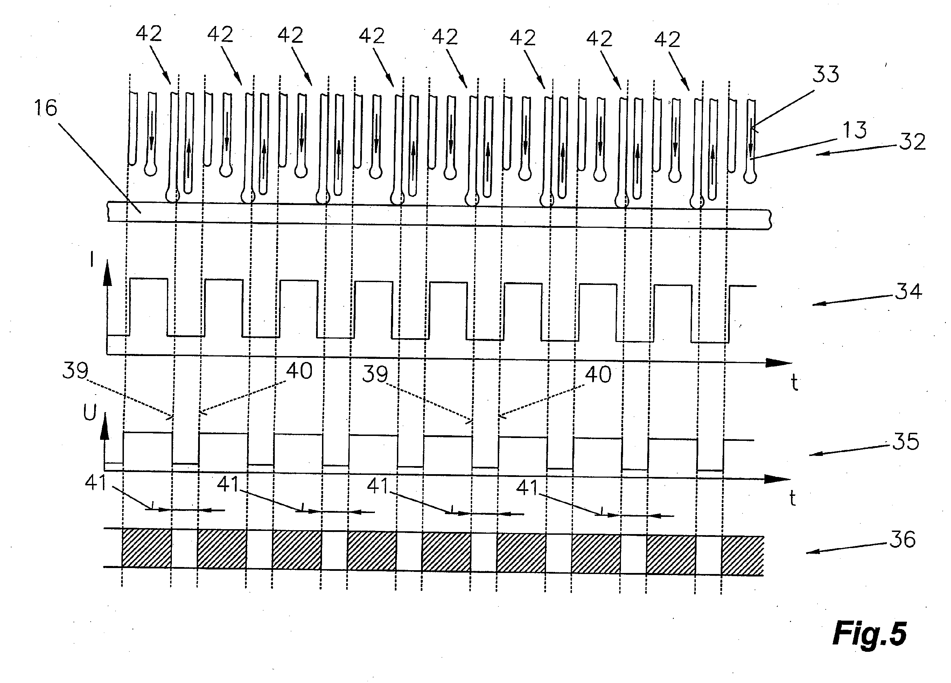

In Fig. 5 ist nunmehr ein neuartiger Schweißprozess, insbesondere ein CMT-Prozess, dargestellt, bei dem das abgeschmolzene Schweißdrahtmaterial in einem Kurzschluss ans Werkstück 16 übergeben wird, wobei jedoch für die Materialablöse keine Stromerhöhung durchgeführt wird, sondern durch eine Schweißdrahtförderrichtungsumkehr das geschmolzene Material vom Schweißdraht 13 abgelöst wird. Dabei wird nunmehr wiederum bevorzugt in der Kurzschlussphase 42 die Aufhellung des Schutzvisiers 29 durchgeführt, wodurch der Schweißer die Ablöse des Materials genau beobachten kann oder nach Auflösen des Kurzschlusses bei geringem Strom dies beobachten kann.

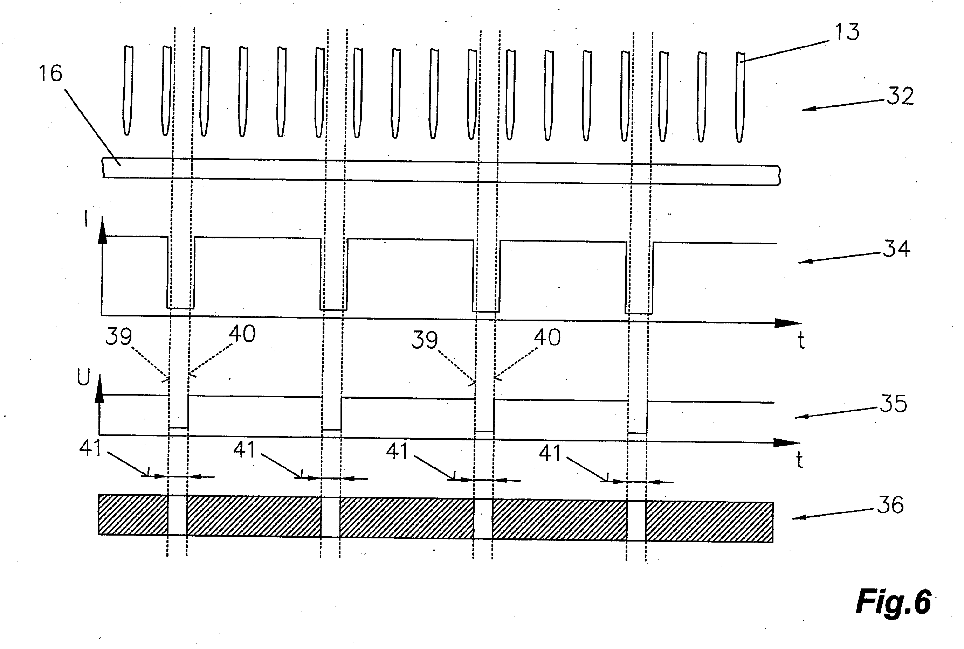

In Fig. 6 ist ein an sich üblicher WIG-Prozess dargestellt, wobei hierzu wiederum für die Aufhellung des Schutzvisiers 29 in die normale Prozessregelung eingegriffen wird, d.h. dass zu bestimmten einstellbaren Zeitabständen 41 eine Aufhellung durchgeführt wird, wobei hierzu von der Steuervorrichtung 4 die Stromquelle 2 derart angesteuert wird, dass eine Absenkung des Schweißstromes durchgeführt wird, worauf eine Änderung des Datensignals 35 erfolgt und das Schutzvisier 29 über eine definierte Zeitdauer 41 aufgehellt wird. Hierbei ist es möglich, dass das Aufhellen periodisch oder zufällig zu verschiedensten Zeitabständen durchgeführt wird.

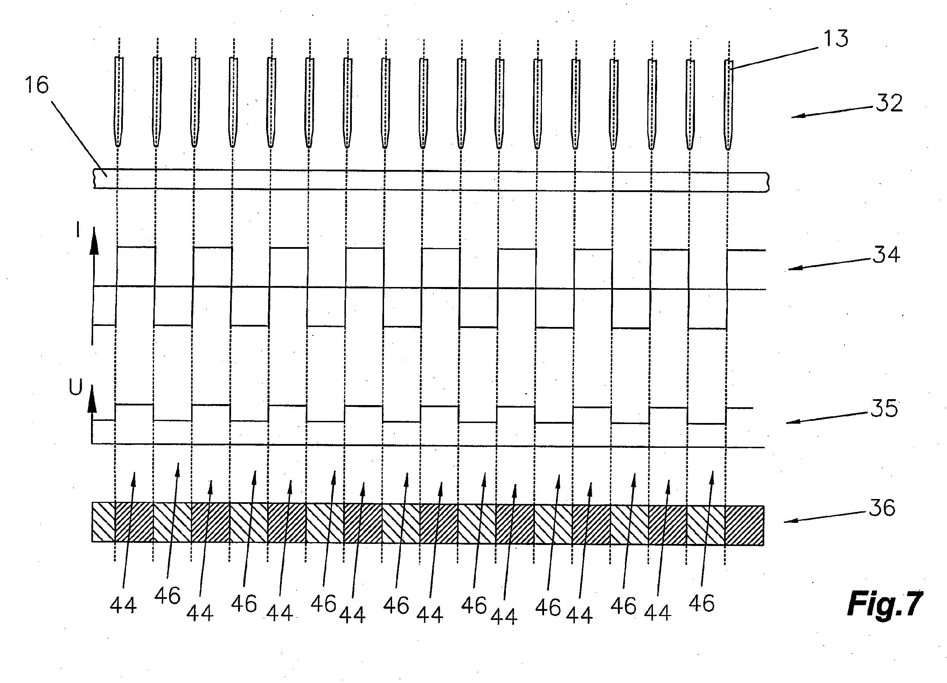

Fig. 7 zeigt einen AC-WIG-Prozess, wobei hier für die positive und negative Periodendauer 44, 46 ein unterschiedlicher Grad der Abdunkelung bzw. eine unterschiedlich starke Abdunkelung des Schutzvisiers 29 durchgeführt wird, da sich in den unterschiedlichen Periodendauern 44, 46 unterschiedliche Lichtbogenintensitäten einstellen. Somit ist es möglich, dass synchron mit dem Periodenwechsel auch die Helligkeitsstufe des Schutzvisiers 29, wie schematisch mit unterschiedlichen Schraffierungen dargestellt, verändert wird.

Grundsätzlich kann also gesagt werden, dass das Aufhellen des Schutzvisier 29 aufgrund unterschiedlicher Einstellungen durchgeführt werden kann, die für alle bekannten Schweißprozesse angewandt werden können und nicht auf die zuvor beschriebenen Ausführungsbeispiele beschränkt sind. Hierbei ist es möglich, dass bei einem zyklisch auftretenden Prozesszustand bei jeder Periode das Schutzvisier 29 entsprechend angesteuert wird oder dass von der Steuervorrichtung 4 ein Auftreten eines Kurzschlusses im Schweißprozess erkannt wird, worauf die Stärke der Abdunkelung des Schutzvisiers 29 während und bevorzugt kurz nach dem Auftrennen des Kurzschlusses oder bis zum Zünden des Lichtbogens 15 reduziert wird. Es ist auch möglich, dass von der Steuervorrichtung 4 je nach Anliegen eines positiven oder negativen Potentials an einer Elektrode bzw. am Schweißdraht 13 die Stärke der Abdunkelung verändert werden, wobei bei einem positiven Potential eine niedrigere Verdunkelung erfolgt als bei einem negativen Potential. Auch ist es für alle bekannten Schweißprozesse möglich, dass zu unterschiedlichen Zeitpunkten eines wiederkehrenden Prozesszustandes ein Aufhellen des Schutzvisiers 29 zum Erreichen eines Hochgeschwindigkeitsvideoeffekts durchgeführt wird.

Durch eine derartige Steuerung des Schweißvisiers 29 eines Schutzhelms 28 wird erreicht, dass eine für den Benutzer optisch einwirkende Helligkeit des Schutzvisiers 29 durch die Dauer des Aufhellens bzw. durch die verschiedensten Abdunkelungsstärken eingestellt wird bzw. erreicht wird, wozu für das Aufhellen des Schutzvisiers 29 von der Steuervorrichtung 4 ein entsprechender Prozesszustand, insbesondere ein Aufhellzustand, eingeleitet wird, wobei bei der Einleitung des Aufhellzustandes von der Steuervorrichtung 4 entsprechende hinterlegte und einstellbare Parameter an die Stromquelle 2 für die Regelung des Schweißprozesses und an den Schweißhelm 28 für die Einstellung der Helligkeit des Schutzvisiers 29 gesendet werden.

Selbstverständlich ist es auch möglich, dass im Schweißhelm 28 eine eigene Steuervorrichtung angeordnet ist, die mit der Steuervorrichtung 4 des Schweißgerätes 1 verbunden ist. Damit können noch zusätzliche Funktionen im Schweißschirm 28, wie beispielsweise eine visuelle Einblendung von Schweißparametern in das Schutzvisier 29, vorgenommen werden. Auch ist eine Anwendung bei einer Roboteranlage möglich, da ein Roboter mit dem Schweißgerät 1 meist in einer Roboterzelle angeordnet ist, wobei die Roboterzelle ein Sichtfenster aufweist. Bildet man dieses Sichtfenster entsprechend wie das Schutzvisier 29 aus, so kann von dem Schweißgerät 1 aus das Sichtfenster entsprechend angesteuert werden.

Weiters ist es auch möglich, dass im Schutzhelm 28 zusätzlich ein Photosensor angeordnet ist, wobei der Photosensor zur Erfassung der tatsächlichen Helligkeit ausgebildet ist. Dabei ist es dann möglich, dass vom Schweißhelm 28 entsprechende Daten an das Schweißgerät 1 übetragen werden. Hierbei kann der Photosensor für Sicherheitsfunktionen eingesetzt werden, wenn dieser beispielsweise hinter dem Schutzvisier 29 angebracht wird, und somit für die Kontrolle und Optimierung der Verschlusszeiten. Der Photosensor kann beispielsweise auch als Not-Aus-Element verwendet werden, falls die Helligkeit einen bestimmten Wert überschreitet.

## Patentansprüche

1. Verfahren zum Steuern eines Schutzvisiers (29), z.B. an einen Schweißhelm (28), von einem Schweißgerät (1), bei dem von dem Schweißgerät (1) über eine Sende-/Empfangsvorrichtung (30) ein Signal übertragen wird, worauf von einer dem Schutzvisier (29) zugeordneten, z.B. im Schweißhelm (28) integrierten, Sende-/Empfangsvorrichtung (31) das elektrisch ansteuerbare Schutzvisier (29) angesteuert wird und eine Abdunkelung des Schutzvisiers (29): erfolgt, wobei während des Schweißprozesses, also nach dem Zünden des Lichtbogens (15), von einer Steuervorrichtung (4) des Schweißgerätes (1) über die Sende-/Empfangsvorrichtungen (30, 31) das Schutzvisier (29) angesteuert wird und eine Abdunkelung des Schutzvisiers (29)erfolgt, **dadurch gekennzeichnet, dass** die Stärke bzw. der Grad der Abdunkelung des Schutzvisiers (29) während des Schweißprozesses verändert wird, indem das Schutzvisier (29) in Abhängigkeit des Prozesszustands des Schweißprozesses zwischen zwei oder mehreren Stufen der Abdunkelung wiederholt abwechselnd abgedunkelt und aufgehellt wird.

2. Verfahren nach Anspruch 1, **dadurch gekennzeichnet, dass** bei einer geringen Stärke der Abdunkelung des Schutzvisiers (29), also bei geöffneter Blende des Schutzvisiers (29), von der Steuervorrichtung (4) ein Erhöhen des Stromes durch eine Stromquelle (2) des Schweißgerätes (1) verhindert wird.

3. Verfahren nach Anspruch 1 oder 2, **dadurch gekennzeichnet, dass** vor der Reduzierung bzw. Veränderung der Stärke der Abdunkelung von der Steuervorrichtung (4) die von der Stromquelle (2) gelieferte Stromhöhe ermittelt wird.

4. Verfahren nach einem der Ansprüche 1 bis 3, **dadurch gekennzeichnet, dass** das Schutzvisier (29) zu fest vorgegebenen Zeitpunkten (39, 40) angesteuert wird.

5. Verfahren nach einem der Ansprüche 1 bis 4, **dadurch gekennzeichnet, dass** die Abdunkelung des Schutzvisiers (29) in Abhängigkeit der Leistung des gerade anliegenden Schweißprozesses verändert wird.

6. Verfahren nach einem der Ansprüche 1 bis 5, **dadurch gekennzeichnet, dass** von der Steuervorrichtung (4) ein Auftreten eines Kurzschlusses, also eine Kurzschlussphase (42) im Schweißprozess erkannt wird, und das Schutzvisier (29) während und bevorzugt kurz nach dem Auftrennen des Kurzschlusses oder bis zum Zünden des Lichtbogens (15) aufgehellt wird.

7. Verfahren nach einem der Ansprüche 1 bis 6, **dadurch gekennzeichnet, dass** die Stärke der Abdunkelung des Schutzvisiers (29) in den abgedunkelten und aufgehellten Phasen in Abhängigkeit des an einer Elektrode anliegenden positiven oder negativen Potentials verändert wird, wobei die Abdunkelung beim positiven Potential während einer positiven Periodendauer (44) stärker ist, als die Abdunkelung beim negativen Potential während einer negativen Periodendauer (46).

8. Verfahren nach einem der Ansprüche 1 bis 7, **dadurch gekennzeichnet, dass** das Schutzvisier (29) entsprechend einem zyklisch auftretenden Prozesszustand des Schweißprozesses bei jeder Periode angesteuert wird.

9. Verfahren nach einem der Ansprüche 1 bis 8, **dadurch gekennzeichnet, dass** bei einem Puls-Schweißprozess, bei dem eine Pulsphase (37) und eine Basisphase (38) zyklisch abgewechselt werden, das Schutzvisier (29) während der Basisphase (38) aufgehellt wird.

10. Verfahren nach einem der Ansprüche 1 bis 9, **dadurch gekennzeichnet, dass** eine für den Benutzer optisch einwirkende Helligkeit des Schutzvisiers (29) durch die Dauer der aufgehellten Phasen des Schutzvisiers (29) eingestellt wird.

11. Verfahren nach einem der Ansprüche 1 bis 10, **dadurch gekennzeichnet, dass** eine für den Benutzer optisch einwirkende Helligkeit des Schutzvisiers (29) durch die Stärke der Abdunkelung eingestellt wird.

12. Verfahren nach einem der Ansprüche 1 bis 11, **dadurch gekennzeichnet, dass** für das Aufhellen des Schutzvisiers (29) von der Steuervorrichtung (4) ein entsprechender Prozesszustand, insbesondere ein Aufhellzustand, eingeleitet wird.

13. Verfahren nach einem der Ansprüche 1 bis 12, **dadurch gekennzeichnet, dass** bei der Einleitung des Aufhellzustandes von der Steuervorrichtung (4) entsprechende hinterlegte und einstellbare Parameter an die Stromquelle (2) übertragen werden.

14. Verfahren nach einem der Ansprüche 1 bis 13, **dadurch gekennzeichnet, dass** das Schutzvisier (29) zu unterschiedlichen Zeitpunkten eines wiederkehrenden Prozesszustandes aufgehellt wird.

## Claims

1. A method for controlling a protective shield (29), e.g. on a welding helmet (28), of a welding device (1), wherein a signal is transferred by the welding device (1) to a transmitting/receiving apparatus (30), whereupon the electrically activatable protective shield (29) is activated by a transmitting/receiving apparatus (31) associated to the protective shield (29), e.g. integrated in the welding helmet (28), and the protective shield (29) is darkened, wherein during the welding process, i.e. after ignition of the electric arc (15), the protective shield (29) is activated by a control device (4) of the welding device (1) via the transmitting/receiving apparatuses (30, 31) and the protective shield (29) is darkened, **characterised in that** intensity and/or degree of darkening of the protective shield (29) is changed during the welding process by repetitively darkening and brightening the protective shield (29) in an alternating manner between two or more states of the intensity of darkening as a function of the process state of the welding process.

2. The method according to claim 1, **characterised in that** at low intensity of darkening of the protective shield (29), i.e. when the screen of the protective shield (29) is opened, an increase in the current by the current source (2) of the welding device 1 is prevented by the control device (4).

3. The method according to claim 1 or 2, **characterised in that** prior to reducing or changing the intensity of darkening, the current level provided by the current source (2) is determined by the control device (4).

4. The method according to any one of claims 1 to 3, **characterised in that** the protective shield (29) is activated at fixedly predetermined points of time (39, 40).

5. The method according to any one of claims 1 to 4, **characterised in that** darkening of the protective shield (29) is changed as a function of the power of the present welding process.

6. The method according to any one of claims 1 to 5, **characterised in that** the control device (4) detects when a short circuit, i.e. a short-circuit phase (42), occurs in the welding process, and **in that** the protective shield (29) is brightened during or preferably shortly after opening of the short circuit, or until ignition of the electric arc (15).

7. The method according to any one of claims 1 to 6, **characterised in that** the intensity of darkening of the protective shield (29) is changed in the darkened and brightened phases as a function of the positive or negative potential applied to an electrode, wherein darkening is stronger in case of the positive potential during a positive period (44) than darkening in case of the negative potential during a negative period (46).

8. The method according to any one of claims 1 to 7, **characterised in that** the protective shield (29) is activated corresponding to a cyclically occurring process state of the welding process.

9. The method according to any one of claims 1 to 8, **characterised in that** in case of a pulse-welding process, wherein a pulse phase (37) and a basic phase (38) are cyclically alternated, the protective shield (29) is brightened during the basic phase (38).

10. The method according to any one of claims 1 to 9, **characterised in that** a brightness of the protective shield (29) which is optically effective for the user is adjusted by the duration of the brightened phases of the protective shield (29).

11. The method according to any one of claims 1 to 10, **characterised in that** a brightness of the protective shield (29) which is optically effective for the user is adjusted by the intensity of darkening.

12. The method according to any one of claims 1 to 11, **characterised in that** a corresponding process state, in particular a state of brightening, is introduced by the control device (4) for brightening the protective shield (29).

13. The method according to any one of claims 1 to 12, **characterised in that** respective deposited and adjustable parameters are transferred to the current source (2) by the control device (4) during introduction of the state of brightening.

14. The method according to any one of claims 1 to 13, **characterised in that** the protective shield (29) is brightened at different points of time of a recurring process state.

## Revendications

1. Procédé permettant de commander une visière de protection (29), par exemple sur un casque de soudage (28), d'un appareil de soudage (1), dans lequel un signal est transmis depuis l'appareil de soudage (1) via un dispositif d'émission/réception (30), à la suite de quoi un dispositif d'émission/réception (31) associé à la visière de protection (29), par exemple intégré dans le casque de soudage (28), actionne la visière de protection (29) actionnable électriquement, et il se produit un assombrissement de la visière de protection (29), la visière de protection (29) étant actionnée par un dispositif de commande (4) de l'appareil de soudage (1) via les dispositifs d'émission/réception (30, 31) et un assombrissement de la visière de protection (29) se produisant pendant le processus de soudage, c'est-à-dire après l'amorçage de l'arc électrique (15), **caractérisé en ce que** l'intensité ou le degré d'assombrissement de la visière de protection (29) varie pendant le processus de soudage, dans la mesure où la visière de protection (29), en fonction de l'état du processus de soudage, est assombrie et éclaircie en alternance de manière répétée entre deux ou plusieurs niveaux d'assombrissement.

2. Procédé selon la revendication 1, **caractérisé en ce que** dans le cas d'une faible intensité d'assombrissement de la visière de protection (29), c'est-à-dire lorsque le masque de la visière de protection (29) est ouvert, le dispositif de commande (4) empêche une augmentation du courant par une source de courant (2) de l'appareil de soudage (1).

3. Procédé selon la revendication 1 ou 2, **caractérisé en ce que** l'intensité du courant fourni par la source de courant (2) est déterminée avant la diminution ou la variation de l'intensité d'assombrissement par le dispositif de commande (4).

4. Procédé selon l'une quelconque des revendications 1 à 3, **caractérisé en ce que** la visière de protection (29) est actionnée à des instants (39, 40) prédéfinis de manière fixe.

5. Procédé selon l'une quelconque des revendications 1 à 4, **caractérisé en ce que** l'assombrissement de la visière de protection (29) varie en fonction du rendement du processus de soudage appliqué à l'instant.

6. Procédé selon l'une quelconque des revendications 1 à 5, **caractérisé en ce que** l'apparition d'un court-circuit, à savoir une phase de court-circuit (42) dans le processus de soudage, est détectée par le dispositif de commande (4), et la visière de protection (29) est éclaircie pendant ou, de préférence, juste avant l'apparition du court-circuit ou jusqu'à l'amorçage de l'arc électrique (15).

7. Procédé selon l'une quelconque des revendications 1 à 6, **caractérisé en ce que** l'intensité d'assombrissement de la visière de protection (29) dans les phases d'assombrissement et d'éclaircissement est modifiée en fonction du potentiel positif ou négatif appliqué à une électrode, l'assombrissement en présence d'un potentiel positif pendant la durée d'une période positive (44) étant plus fort que l'assombrissement en présence d'un potentiel négatif pendant la durée d'une période négative (46).

8. Procédé selon l'une quelconque des revendications 1 à 7, **caractérisé en ce que** la visière de protection (29) est actionnée à chaque période conformément à un état, se produisant cycliquement, du processus de soudage.

9. Procédé selon l'une quelconque des revendications 1 à 8, **caractérisé en ce que** dans un processus de soudage par impulsions, dans lequel une phase d'impulsion (37) et une phase de base (38) s'alternent de façon cyclique, la visière de protection (29) est éclaircie pendant la phase de base (38).

10. Procédé selon l'une quelconque des revendications 1 à 9, **caractérisé en ce qu'**une luminosité de la visière de protection (29), agissant optiquement pour l'utilisateur, est réglée par la durée des phases d'éclaircissement de la visière de protection (29).

11. Procédé selon l'une quelconque des revendications 1 à 10, **caractérisé en ce qu'**une luminosité de la visière de protection (29), agissant optiquement pour l'utilisateur, est réglée par l'intensité de l'assombrissement.

12. Procédé selon l'une quelconque des revendications 1 à 11, **caractérisé en ce que** pour l'éclaircissement de la visière de protection (29), un état correspondant du processus, en particulier un état d'éclaircissement, est introduit par le dispositif de commande (4).

13. Procédé selon l'une quelconque des revendications 1 à 12, **caractérisé en ce qu'**au moment de l'introduction de l'état d'éclaircissement, des paramètres stockés et réglables correspondants sont transmis par le dispositif de commande (4) vers la source de courant (2).

14. Procédé selon l'une quelconque des revendications 1 à 13, **caractérisé en ce que** la visière de protection (29) est éclaircie à des instants différents d'un état de processus récurrent.
